# EUROPEAN PATENT SPECIFICATION

(11) **EP 2 065 815 B1**
(45) Date of publication and mention of the grant of the patent: **19.09.2018**
(21) Application number: 07023160.0
(22) Date of filing: 29.11.2007
(51) Int. Cl.: G06F 17/30

(54) **Technique for processing database requests relating to hierarchically structured data items**
Verfahren zur Verarbeitung von Datenbankanfragen über hierarchisch strukturierte Datenelemente
Technique de traitement de requêtes de bases de données relatives à des articles de données hiérarchiquement structurés

(43) Date of publication of application: 03.06.2009
(73) Proprietor: SAP SE, 69190 Walldorf (DE)
(72) Inventor: Schwarzmann, Winfried, 68753 Waghäusel (DE)
(74) Representative: Müller-Boré & Partner Patentanwälte PartG mbB

(56) References cited:
- WO-A-2005/069168
- US-A1- 2002 126 545
- US-A1- 2003 195 865
- LARSON P BARBER VERISIGN M ET AL: "Observed DNS Resolution Misbehavior; rfc4697.txt" IETF STANDARD, INTERNET ENGINEERING TASK FORCE, IETF, CH, 1 October 2006 (2006-10-01), XP015048671 ISSN: 0000-0003
- MOCKAPETRIS ISI P: "DOMAIN NAMES - CONCEPTS AND FACILITIES; rfc1034.txt" IETF STANDARD, INTERNET ENGINEERING TASK FORCE, IETF, CH, 1 November 1987 (1987-11-01), XP015005973 ISSN: 0000-0003
- MARK ANDREWS (CSIRO): "Negative Caching of DNS Queries (DNS NCACHE); draft-ietf-dnsind-ncache-09.txt" IETF STANDARD-WORKING-DRAFT, INTERNET ENGINEERING TASK FORCE, IETF, CH, vol. dnsind, no. 9, 1 November 1997 (1997-11-01), XP015017815 ISSN: 0000-0004
- JAEYEON JUNG ET AL: "DNS Performance and the Effectiveness of Caching" IEEE / ACM TRANSACTIONS ON NETWORKING, IEEE / ACM, NEW YORK, NY, US, vol. 10, no. 5, 1 October 2002 (2002-10-01), XP011077188 ISSN: 1063-6692
- HAE DON CHON ET AL: "Range and kNN Query Processing for Moving Objects in Grid Model" MOBILE NETWORKS AND APPLICATIONS, KLUWER ACADEMIC PUBLISHERS, BO, vol. 8, no. 4, 1 August 2003 (2003-08-01), pages 401-412, XP019213761 ISSN: 1572-8153

## Description

### Technical Field

The invention generally relates to the processing of database requests. Specifically, the invention relates to database requests that specify data items which are organized in hierarchical structures.

### Background

As a result of the steadily increasing amount of data that has to be handled by modern computer systems, efficient database technologies have become a key feature of such systems. It has, however, been found that database accesses are often consuming valuable real-time processing resources. The processing resources consumed by database accesses may thus be lacking in an application environment.

In order to reduce database accesses in context with application environments in which it can not be excluded that the same data might be requested more than once, data buffering techniques have been proposed. Conventional buffering techniques temporarily store data that have been retrieved by earlier database accesses in a buffer. When the buffered data is then requested again at a later point in time, no new database accesses are required. Rather, the requested data may be directly read out of the buffer.

The buffering of data that has been retrieved from a database is sometimes also referred to as positive buffering. Negative buffering, on the other hand, designates the temporal keeping of information about data that do not exist in a database. Obviously, unnecessary database accesses can also be avoided if it can be determined from the negative buffer that certain requested data are not available in the database.

Negative buffering is especially advantageous in scenarios in which there exists a low proportion between data stored in the database and data that may potentially be requested by an application. Such a scenario is typical for hierarchically organized data items that are interrelated in a hierarchical data structure in accordance with
parent/child relationships. Hierarchical data structures based on parent/child relationships are, for example, described in EP 1 617 326 A1, EP 1 617 355 A1 and EP 1 617 356 A1. It would thus be desirable to apply negative buffering techniques to data organized in hierarchical data structures.

The request for comment rfc1034 "Domain Names - Concepts and Facilities" details the tree like structure of domain names in the dynamic name system (DNS). It is described how a given domain name query is resolved to an IP address. The resolving process includes sending a request to a given DNS server. The DNS server implements a local database that contains the answer to the query or a referral to another name server "closer" to the desired information. It is also discussed to optionally cache negative responses so it is not necessary to search the local database completely for nonexistent entries.

In the rfc4697 "Observed DNS Resolution Misbehaviour", it is also discussed to cache responses to requests in order to minimize the database accesses. It is recommended to delegate requests that contain certain structures to specialized servers.

The caching is further elaborated in the Internet-Draft "Negative Caching of DNS Queries". It elaborates on the caching of negative responses and how different types of responses should be handled. It also discusses technical aspects such as the time to life (TTL) and how the looping of negative responses between a pair of servers can be prevented.

An in-depth analysis of the performance of caching is provided by "DNS Performance and the Effectiveness of Caching" (IEEE transactions on networking). It is deduced in the document that negative caching is not working as well as it could. Furthermore it is suggested that name servers should refuse to forward queries for unqualified host names.

The usage of negative caching is described in the document US 2003 195865 as part of an electronic file system that is driven by a database. A positive cache contains file metadata such as pathnames and permissions to reduce the number of database accesses. A negative cache also stores negative responses from the database if a file or folder is not available. Subsequent requests trying to resolve the file or path are then answered by consulting the negative cache.

### Summary

It is an object of the present invention to provide an efficient negative buffering technique for hierarchically structured data items that enables an efficient search for the most specific data set in relation to the hierarchically structured data items which satisfies a given database request. Moreover, the buffering technique should permit at least in some cases a reduction of unnecessary database accesses.

This object is solved by a method, a module and a computer system according to the independent claims. Preferred embodiments of subject-matter of the dependent claims.

The most specific data set is either a data set exactly matching the database request or a data set that comprises at least one data item that is a parent of the at least one data item specified in the search request. The latter data set will thus be related with the exactly matching data set via the hierarchical structure that interrelates the data item specified in the search request and its parent included in the most specific data set. If the matching data set does not exist, then the data set with the hierarchically closest relation, or an arbitrary projection thereof, can be regarded to represent the requested answer to the database request.

By consulting the negative buffer one or more times during the traversing performed to determine the most specific data set, the total amount of traversing steps required to find the most specific data set (or to come to the conclusion that there does not exist any data set satisfying the database request) can significantly be reduced. Since at least some of the traversing steps may be accompanied by database accesses, the total amount of database accesses can thus be reduced also.

It should be noted, however, that the individual traversing steps need not necessarily be accompanied by any database accesses. For example, and depending on the volume of data sets to be searched, all potentially relevant data sets could be transferred in an initial step (e.g., upon receipt of a new database request) from the database into a local information pool such as a positive buffer. In such a case, database accesses may be rendered obsolete during the traversing steps as the whole relevant data space will be included in the positive buffer. However, an initial database access for retrieving all potentially relevant data sets at one time will not be efficient, or will simply technically not be possible, in cases in which very large amounts of data sets are of potential relevance, and in such cases database accesses may then also become necessary during one or more of the traversing steps.

The traversing of the hierarchical structure may comprise determining another data item that constitutes a parent of the data item specified by the search parameter received via the database request. The parent thus determined may be a first order parent, a second order parent ("grandparent") or any higher order parent of the specified data item. Determining a parent may include parsing the hierarchical structure starting with the specified data item. Once a parent has been determined, the negative buffer may be searched in a next step based on this parent.

Assuming that the negative buffer (and, optionally, any other locally available information pool including, for example, a positive buffer) does not provide any final hint concerning the existence of a data set including the specified data item or a parent thereof, one or more database accesses may become necessary during the traversing of the hierarchical structure as stated above. In this regard, determining the most specific data set may additionally comprise constructing a database query that includes the newly determined data item (i.e., the parent) as a search parameter.

Thanks to repeatedly consulting the negative buffer during the traversing of the hierarchical structure, the construction of database queries and the resulting database accesses can often be omitted, or the scope of the database accesses can at least be reduced to a smaller data space. Such favourable situations may occur, for example, when the consultation of the negative buffer results in the conclusion that at least one parent of the newly determined data item (and thus potentially a branch in the hierarchical structure) can be skipped during the traversing. As a result, no database queries will have to be constructed and no database accesses will have to be performed for such a branch that can been skipped.

The method comprises maintaining a positive buffer with data sets that have been retrieved in response to earlier database queries. With the provision of a positive buffer, traversing the hierarchical structure may comprise consulting also the positive buffer to determine if the most specific data set can be read from the positive buffer. If the most specific data set fulfilling the database request has been retrieved from the database already earlier (and is still stored in the positive buffer), this data set can thus be read directly from the positive buffer and forwarded to the requesting entity (e.g. a specific application). The combined provision of negative buffer and a positive buffer provides the advantage that a database query has to be constructed only if the database request cannot be answered based on the combined contents of the negative buffer and the positive buffer. Otherwise, construction of the database query and the corresponding database access can be omitted.

The negative buffer may comprise a plurality of entries, and each entry may represent or indicate a data set (or a set of data sets) not included in the database. The non-existence of a data set or a set of data sets may be indicated, for example, by an entry in the negative buffer that comprises one or more key data items (as they may appear in database key fields) of the non-existing data set.

For at least some of the entries the negative buffer may additionally comprise a reference to at least one data set in the positive buffer. When consulting the negative buffer results in the finding of a reference to a data set in the positive buffer, a branch of parents in the hierarchical structure can be skipped during the traversing. The skipping of a complete branch eliminates unnecessary traversing steps and (in at least some cases) unnecessary database accesses that may be associated therewith.

Maintaining the negative buffer comprises continuously updating the negative buffer based on at least one of the results of database queries (as performed, for example, initially upon reception of the database request to fill the positive buffer and before the traversing is started) and the results of earlier database requests. Moreover, maintaining the negative buffer comprises aging-out (e.g. deleting)
older entries in order to keep the size of the negative buffer manageable. Additionally, such an aging-out may be performed for some or all entries of the negative buffer when the content of the database is updated. The positive buffer may be maintained in a similar manner as the negative buffer.

In one implementation, the data sets included in the database have a limited temporal validity. In such a case, temporal validity information may be associated not only with the data sets, but also with any entries in the negative buffer and/or in the positive buffer. If for the same key data item (or set of key data items) there exist in the database exactly two data sets D1 and D2 with validity periods V1= [Time1,Time2] and V2= [Time3,Time4] (with Time2<Time3), then the negative buffer may comprise an entry indicative of non-existence of data sets for the time period T=[Time2,Time3]. In such an implementation, the database request may comprise at least one point in time within a given (application specific) planning horizon which has to fall into the validity period of the returned data set.

Traversing the hierarchical structure is typically based on a specific traversing strategy. In the case of a hierarchical structure organized in a tree-like manner, the traversing strategy may require linearising the data items of the hierarchical structure. Possible linearising approaches include a Depth-First-Search (DFS) and a Breadth-First-Search (BFS). Traversing the hierarchical structure requires the availability of information representative of the hierarchical structure. This information may be obtained via a separate (e.g. initial) database access, from an application environment, from a local storage, or in any other way as described for example, in EP 1 617 326 A1.

The data sets included in the database may comprise data items of two or more different data categories. In a similar manner, the database request may comprise two or more search parameters each specifying a data item belonging to a specific data category. In the case of a database with multiple data categories, the data items of at least two data categories may be interrelated in separate and independent hierarchical structures in accordance with parent/child relationships. In such a case the traversing of the hierarchical structures (i.e., the determination of the most specific data set) may comprise prioritizing the traversing of one of the hierarchical structures over traversing of another hierarchical structure.

The content of the data sets may relate to various different contexts. In one implementation, the content relates to a transportation context, and the data sets
may thus relate to transportation lanes between two locations or zones. The locations and zones may be hierarchically structured in that a zone is defined to be a group of at least one of one or more locations and one or more zones. Any element of the zone can thus be considered as a child of this zone, with this zone acting as a parent.

In the transportation context, the method can be practised in connection with the transportation of tangible or intangible objects. Tangible objects such as fluids have to be transported via complex pipeline systems. Goods such as construction material require transportation between remote geographical locations across a network of ground, air and sea ways. Intangible objects like electrical signals have to be transported, for example, within the highly complex wiring system in an airplane. Other intangible objects, such as information in the form of electronic mails, are sent across the World Wide Web via a plurality of intermediary routers. The locations may be represented by Internet Protocol (IP) addresses, ZIP codes, and so on.

The invention may be realized in the form of software, in the form of hardware, or as a combined software/hardware solution. As for a software aspect, a computer program product comprising program code portions performing the steps discussed herein when the computer program product is run on a computer system is provided. The computer program product may be stored on a computer-readable recording medium such as a permanent or re-writeable memory within or associated with a computer system, a removable data carrier such as a CD-ROM, a DVD or a USB-Stick, and so on. Additionally or alternatively, the computer program product may be provided for download, for example via a data network such as the Internet.

As for a hardware aspect, a module for processing database requests is provided, wherein the module may be adapted to be inserted between an application layer and a database layer of a computer system. The module comprises a database querying component adapted to send search queries to a database with a plurality of data sets, wherein the data sets comprise data items of one or more data categories and wherein the data items of at least one data category are interrelated in a hierarchical structure in accordance with parent/child relationships, a negative buffer with entries indicating data sets not included in the database, an interface adapted to receive a database request that comprises at least one search parameter specifying a data item belonging to the hierarchical structure, the database request being directed at retrieving the most specific data set from the database relative to the specified data item, and a processor adapted to determine the most specific data set by traversing the hierarchical structure in one or more traversing steps starting with the specified data item, wherein at least one of the traversing steps comprises consulting the negative buffer to eliminate unnecessary traversing steps ahead.

The module comprises a positive buffer comprising data sets that have been retrieved in response to earlier database queries. Moreover, the processor may be adapted to traverse the hierarchical structure to determine a parent of the specified data item and to continue the traversing with the parent. The database querying component may be adapted to construct a database query that includes a search parameter specifying the parent determined by the processor.

According to a still further aspect, a computer system is provided comprising an application layer with an application adapted to generate database requests, a database layer with a database containing a plurality of data sets, wherein the data sets comprise data items of one or more data categories and wherein the data items of at least one data category are interrelated in a hierarchical structure in accordance with parent/child relationships, and a module as discussed herein.

### Brief Description of the Drawings

In the following, the invention will be described further with reference to exemplary embodiments illustrated in the drawings, wherein:
- Fig. 1: is a schematic diagram of a first embodiment of a computer system;
- Fig. 2: is a schematic flow diagram exemplarily illustrating the operation of the computer system of claim 1;
- Figs. 3 and 3B: show two exemplary traversing strategies for a data item hierarchy without levels;
- Figs. 4A and 4B: show two exemplary traversing strategies for a data item hierarchy with levels;
- Figs. 5 and 6: schematically show the prioritizing of the traversing of three separate hierarchical structures to build a joined hierarchy;
- Fig. 7: schematically illustrates the contents of a negative buffer with references to data sets in a positive buffer;
- Fig. 8: is a schematic diagram of a further embodiment of a computer system;
- Figs. 9A and 9B: show the structure of a positive buffer and a negative buffer for the computer system of Fig. 8;
- Fig. 10: illustrates a reduction of the traversing space by skipping a branch of a hierarchical structure; and
- Fig. 11: illustrates an exemplary search query structure.

### Detailed Description of Preferred Embodiments

In the following description, for purposes of explanation and not a limitation, specific details are set forth, such as specific configurations of computer systems, of positive and negative buffers, of database requests and of search queries, in order to provide a thorough understanding of the present invention. It will be apparent to one skilled in the art that the present invention may be practised in other embodiments that depart from these specific details.

Those skilled in the art will further appreciate that the functions explained herein below may be implemented using individual hardware circuitry, using software functioning in conjunction with a programmed micro processor or general purpose computer, using an Application Specific Integrated Circuit (ASIC) and/or using one or more Digital Signal Processors (DSPs). It will also be appreciated that while the present embodiments are primarily described in context with computer systems and methods, the techniques proposed herein may also be embodied in a computer processor and a memory coupled to the processor, wherein the memory is encoded with one or more programs that perform the techniques disclosed herein when executed by the processor.

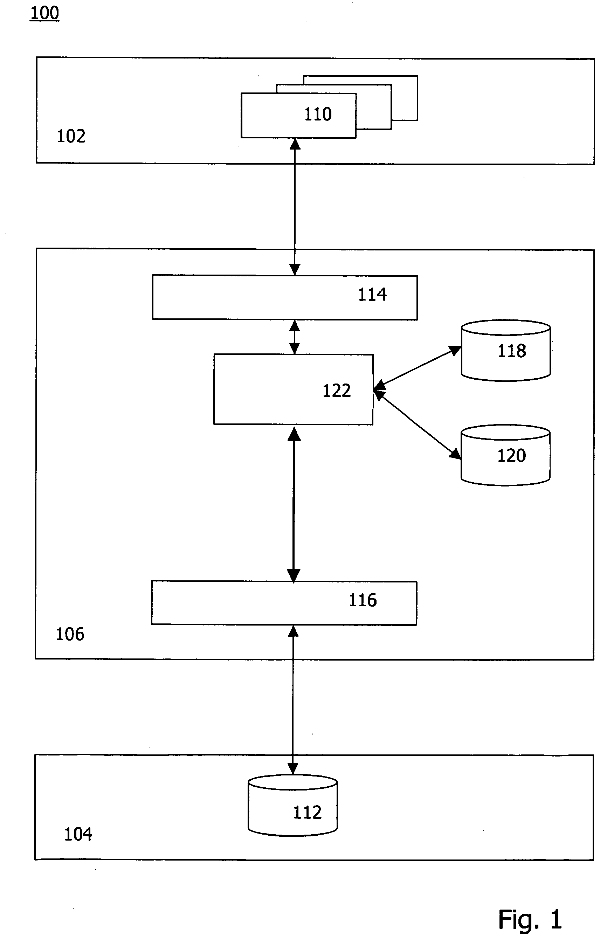

Fig. 1 schematically illustrates an embodiment of a computer system 100 comprising an application layer 102, a database layer 104 and a middleware layer 106 arranged between the application layer 102 and the database layer 104. The application layer 102 constitutes an application environment in which one or more applications 110 are located. Each application 110 is configured to generate database requests and to transfer the database requests to the middleware layer 106. The middleware layer 106 is in charge of assessing the received database requests. Depending on the result of this assessment, the middleware 106 may decide to construct one or more database queries, and to access the database layer 104 based on these database queries.

The database layer 104 comprises a database 112 storing a plurality of data sets and a database management system. The data sets contained in the database 112 comprise data items of one or more data categories, and the data items of at least one data category are interrelated in a hierarchical structure in accordance with parent/child relationships. The database 112 may be organized according to one of the well-known database models, for example according to the relational model, the hierarchical model, the flat model or the object-oriented model.

In accordance with its functions of receiving database requests and of performing, if necessary, database accesses, the middleware layer 106 comprises an application interface 114 and a database querying component 116. The application interface 114 is adapted to receive, from the application layer 102, a database request that comprises at least one search parameter. The search parameter specifies a data item belonging to a hierarchical structure, and the database request is directed at retrieving the most specific data set from the database 112 relative to the specified data item. The most specific data set may be a data set including the specified data item or, if no such data set can be found, a data set including a first or higher order parent of the specified data item.

The middleware layer 106 further comprises a negative buffer 118 and a positive buffer 120. The negative buffer 118 contains entries indicative of data sets not included in the database 112. The positive buffer 120, on the other hand, comprises data sets that have been retrieved from the database 112 in response to earlier database queries.

As shown in Fig. 1, the core component of the middleware layer 106 is a processor 122 adapted to determine the most specific data set satisfying a search request received via the application interface 114. To this end, the processor 122 is adapted to access the negative buffer 118 and the positive buffer 120 and to traverse the hierarchical structure in one or more traversing steps starting with the data item specified in the database request. The processor 122 is configured to consult, during the traversing, the negative buffer 118 and the positive buffer 120 to eliminate unnecessary traversing steps ahead and to possibly avoid any database accesses that might be associated with such unnecessary traversing steps.

The database querying component 116 is in communication with the processor 122 and is configured to construct, in response to an instruction from the processor 122, a database query that includes as a search parameter the data item specified in the database request and/or a parent of this data item (that may have been determined by the processor 122 upon traversing the hierarchical structure). The database query thus generated is passed to the database layer 104.

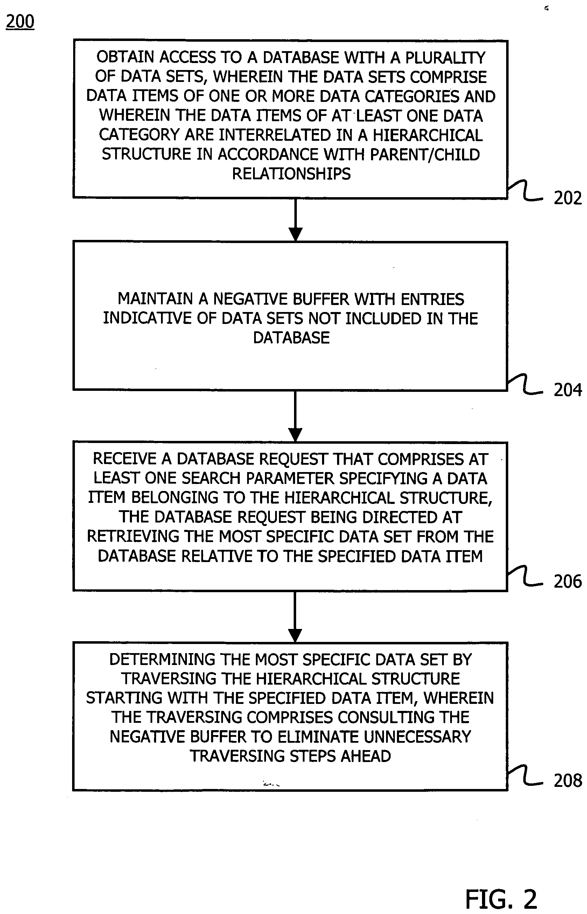

Fig. 2 shows a schematic flow diagram 200 exemplarily illustrating the operation of a module comprising the components located in the middleware layer 106 of Fig. 1. It should be noted that the steps illustrated in Fig. 2 could also be carried out by a module having a different configuration.

In a first step 202, access to the database 112 is obtained(e.g. by installation of the database 112 or by initializing a software interface towards the database 112). As mentioned above, the database 112 includes a plurality of data sets with data items of one or more data categories, and the data items of at least one data category are interrelated in a hierarchical structure in accordance with parent/child relationships.

In another step 204, the negative buffer 118 referencing data sets not included in the database 112 is initialized (e.g., cleared) and maintained. Maintaining the negative buffer 118 may include regularly updating the negative buffer 118 based on information about non-existing data sets which continuously becomes available in the middleware layer 106 in context with database accesses that do not return any data sets. Moreover, the entries in the negative buffer 118 may be regularly aged-out. It should be noted that step 204 could be continuously performed and in parallel to any other steps illustrated in Fig. 2.

The following steps are repeated every time the application 110 uses the middleware layer 106 in order to obtain access to the database 112.

In a step 206, a database request is received by the application interface 114. The database request received in step 206 comprises one or more search parameters, and least one of the search parameters specifies a data item belonging to the hierarchical structure. The database request received in step 206 is directed at retrieving the most specific data set from the database 112 relative to the specified data item.

Still in step 206, the database query generator 116 may send optionally one or more search queries to the database 112 including as search parameter the specified data item and/or any parent thereof. Based on the result of these queries, the positive buffer 120 is filled with all potentially relevant data sets and further database accesses can be avoided for this specific database request later on. Additionally, the negative buffer 118 is updated with entries representing non-existing data sets which were included in the search space of the queries.

Then, in step 208, the most specific data set fulfilling the database request received in step 206 is determined. To this end, the hierarchical structure is traversed starting with the specified data item. During the traversing process, the negative buffer 118 (and, optionally, also the positive buffer 120) may be consulted once or repeatedly in order to eliminate unnecessary traversing steps with respect to the hierarchical structure ahead.

The negative buffer 118 can be updated further based on the result of the traversing process. If the entire traversing process could not determine any data set, then for the specified data item and all its parents an entry in the negative buffer 118 is either created or updated in the sense that this non-existence is memorized for future database requests. Otherwise, if the traversing process found the most specific data set, then for all data sets being children of this most specific data set and parents of the specified data item, an entry in the negative buffer 118 has to be either created or updated such that it contains now a reference to this most specific data set in the positive buffer 120.

It should be noted that the steps 206 and 208 could be performed for multiple requests in parallel.

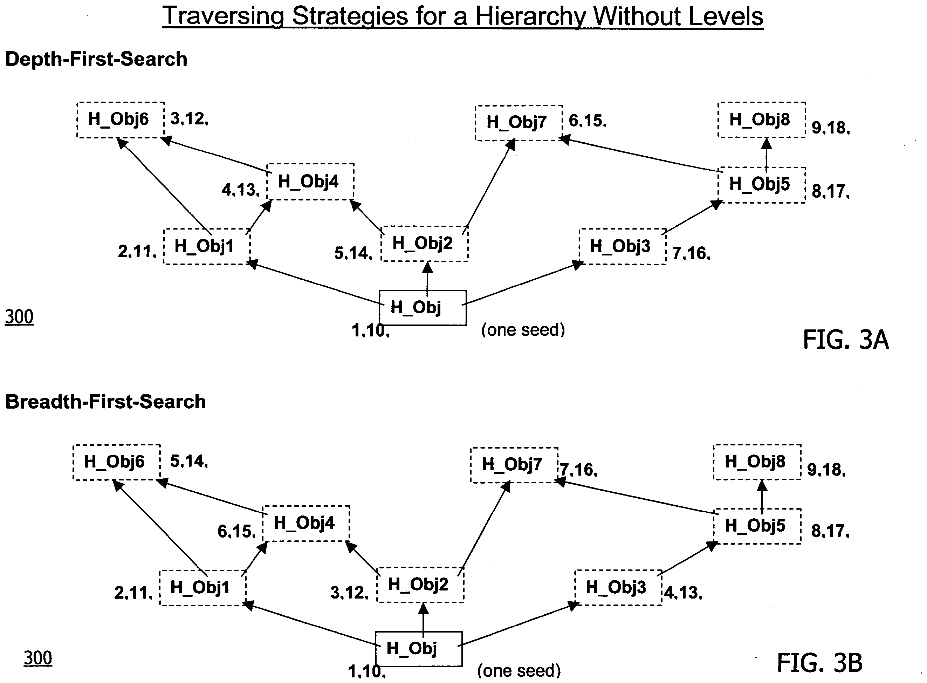

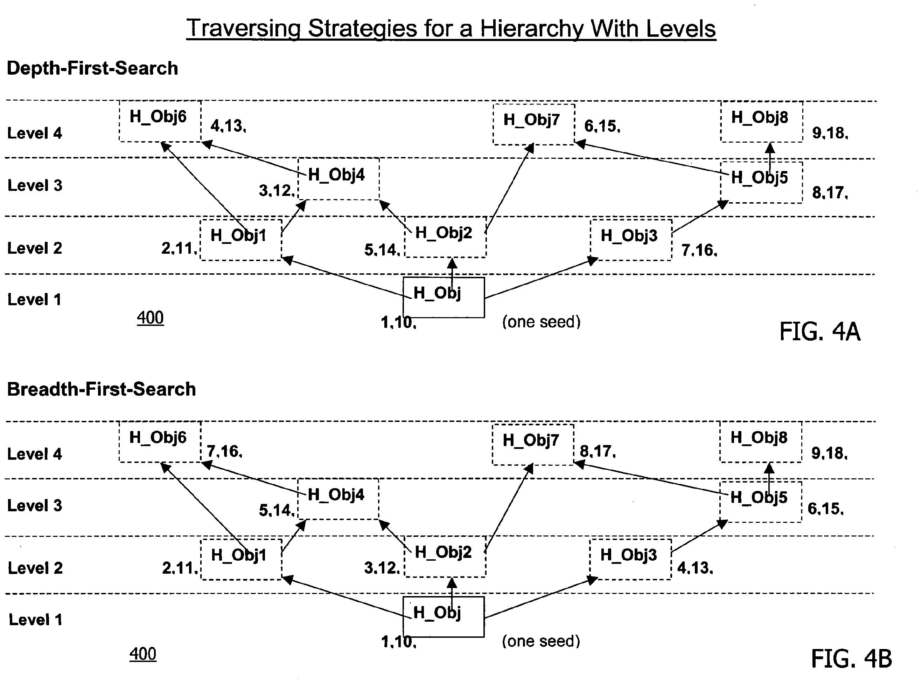

Figs. 3A, 3B, 4A and 4B illustrate exemplary hierarchical structures and associated traversing strategies. Generally, a hierarchical structure interrelates data items of a specific data category in a hierarchical manner. The hierarchical structure exists in parallel to the individual data sets that may each include one or more of the data items organized in the hierarchical structure. With reference to Fig. 1, hierarchical structures may be maintained on the application layer 102, on the database layer 104 or on the middleware 106. Typically, each hierarchical structure includes at least a plurality of data items (or references to data items) and hierarchy information that specifies the parent/child relationships among these data items.

The data items interrelated in a hierarchical structure may be organized in a hierarchy without hierarchy levels (see Figs. 3A and 3B) or in a hierarchical structure with hierarchy levels (see Figs. 4A and 4B). The absence or existence of hierarchy level usually influences the sequence in which a set of data items interrelated in hierarchical structure is traversed as will now be explained in more detail.

In Fig. 3A a hierarchical structure 300 without any hierarchy levels is illustrated in context with a Depth-First-Search (DFS) traversing strategy. The hierarchical structure 300 interrelates nine data items H_Obj, H_Obj1, ... H_Obj8. In the exemplary hierarchical structure 300, data item H_Obj is a child of the three data items H_Obj1, H_Obj2 and H_Obj3. Data item H_Obj1 is therefore a parent of data item H_Obj. Data item H_Obj1 is itself a child of data items H_Obj6 and H_Obj4. For this reason, data item H_Obj6 can be regarded as a first order parent of data item H_Obj1 and as a second order parent (or "grandparent") of data item H_Obj.

The parent/child relationships among the data items of the data structure 300 shown in Figs. 3A and 3B are the same as for the data items H_Obj to H_Obj 8 of the data structure 400 illustrated in Figs. 4A and 4B. The difference between the hierarchical structure 300 of Figs. 3A and 3B and the hierarchical structure 400 of Figs. 4A and 4B resides in the fact that the data items of the hierarchical structure 400 are additionally arranged on one of four possible hierarchy levels. Accordingly, the hierarchical structure 400 additionally includes hierarchy level information for each data item.

It will now be assumed that a certain database request received by the application interface 114 of Fig. 1 in step 206 of flow diagram 200 shown in Fig. 2 comprises a plurality of search parameters including one search parameters specifying data item H_Obj. It will further be assumed that there does not exist any matching data set including the data item H_Obj in the database 112. In this case the hierarchical structure 300, 400 has to be traversed in an effort to find the next most specific data set from the database (relative to the specified data item H_Obj) satisfying the database request to a "lesser" extent. Such a data set may, for example, include the data item H_Obj 4 instead of data item H_Obj (i.e., the "grandparent "of data item H_Obj) and will additionally satisfy all the other search parameters comprised in the database request. In this case the corresponding data set including data item H_Obj 4 will be determined to be the most specific data set from the database relative to the specified data item H_Obj.

In one illustrative example, data item H_Obj may be a single IP address belonging to an IP address range represented by data item H_Obj4. Alternatively, the data item H_Obj may be a specific town, and the data item H_Obj4 may be representative of a region or country in which this town is located.

In order to find the data set including the data item H_Obj4, the hierarchical structure 300, 400 has to be traversed, and in each traversing step (or "hop"), certain actions may be taken. Such actions may include one or more of consulting the negative buffer 118, consulting the positive buffer 120, creating a database query and performing an associated database access to query the database 112.

Traversing the hierarchical structure 300, 400 includes a linearization process in which the individual data items H_Obj to H_Obj8 are arranged in a specific sequence. Basically, there exist two different options for linearising a hierarchal structure.

The first option is shown in Fig. 3A and is called Depth-First-Search (DFS). The sequence of traversing steps is indicated by numbers printed next to the data items. As becomes apparent from Fig. 3A, the DFS strategy starts with one specific seed (here data item H_Obj), directly proceeds from H_Obj to the left-most direct (first order) parent H_Obj1, and from there to the direct parents of data item H_Obj1, namely data items H_Obj6 and H_Obj4. Since the latter two data items do not have any parent, traversing continues with the next first order parent of data item H_Obj, namely data item H_Obj2, and so on.

A further traversing strategy is the so-called Breadth-First-Search (BFS) illustrated in Fig. 3B. Starting with data item H_Obj, the traversing process will first consider all first order parents of this data item, namely data items H_Obj1, H_Obj2, and H_Obj3. Then all second order parents of data item H_Obj are considered, namely data items H_Obj6, H_Obj4, H_Obj7 and H_Obj5, and so on.

As shown in Figs. 4A and 4B, the DFS and BFS traversing strategies are also applicable to the hierarchical structure 400 with hierarchy levels. In contrast to the traversing strategies for the hierarchal structure 300 without hierarchy levels shown in Figs. 3A and 3B, the hierarchy levels have additionally to be considered during the traversing process. The additional consideration of the hierarchy level leads to a slightly different traversing order of the individual data items H_Obj to H_Obj8 as illustrated by the numbers printed next to the data items H_Obj to H_Obj8. Hierarchy levels as shown in Figs. 4A and 4B can be defined statically or dynamically. A static definition requires assigning a predefined hierarchy level to each data item of the hierarchical structure for example during application maintenance. A dynamic definition can be carried out on the middleware layer 106.

There generally should be a strict order among direct (i.e., first order) parents. If hierarchy levels are defined as shown in Figs. 4A and 4B, then a direct parent on the lower level is traversed first. If no hierarchy levels are defined as illustrated in Figs. 3A and 3B, or if both direct parents are on the same hierarchy level, additional constraints may be provided to define a strict order among direct parents.

As already briefly mentioned above, the negative buffer 118 and the positive buffer 120 may be consulted during each traversing step (i.e., after each hop from one data item to the next data item in the hierarchical structures 300, 400). Database accesses can thus be reduced to situations in which neither the negative buffer 118 nor the positive buffer 120 comprises information for finally deciding whether or not the received database request can be answered.

Once one or more new database requests are received, it must thus first be assessed by the components on the middleware layer 106 whether accesses to the database 112 are required at all. During this assessment, the positive buffer 120 is first consulted for the one or more data items in the database request. If it is determined that the positive buffer 120 does not include any matching data set, the negative buffer 118 is consulted in a next step. Consultation of the negative buffer 118 may result in the finding that the database request cannot be fulfilled at all, or it can be found out that the most specific data set fulfilling the database request is already included in the positive buffer 120. To this end, the entries in the negative buffer 118 may include references to associated "most specific" data sets stored in the positive buffer 120. In all of these cases database accesses can be avoided and the database request can be answered either by returning to the application layer a data set from the positive buffer 120 or by returning, based on an entry of the negative buffer 118, a message that the database request cannot be fulfilled.

As a consequence, the database querying component 116 will at most have to generate database queries for such database requests that cannot be directly answered based on the entries in the negative buffer 118 and the positive buffer 120. Based on the information obtained in particular from consulting the negative buffer 118, the database query generator 124 may tailor the database query often in such a manner that the scope of the database access can be reduced compared to cases in which no negative buffering occurs.

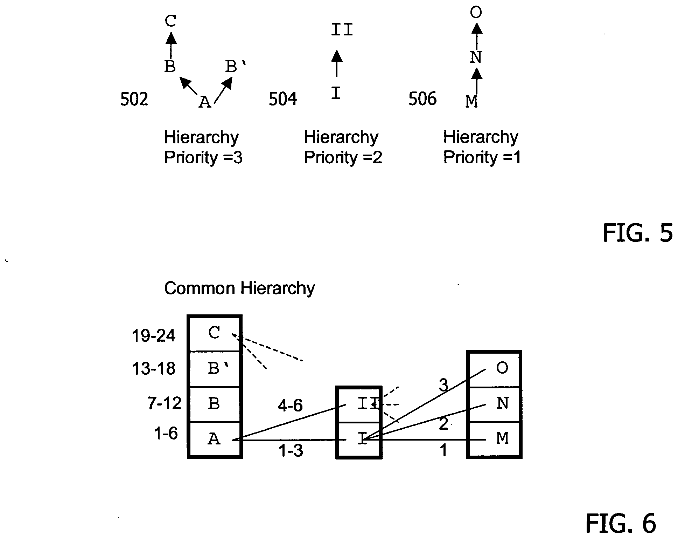

In some cases, a database request may pertain to two or more data categories, and the data items of these data categories may each be interrelated in separate hierarchical structures in accordance with parent/child relationships. In such a case a traversion strategy is required that linearises two or more independent hierarchical structures. Such an inter-hierarchy linearization may be obtained by prioritizing the traversing of one hierarchal structure over the traversing of another hierarchal structure as will now be explained with reference to Figs. 5 and 6.

Fig. 5 shows three separate hierarchal structures 502, 504, 506 hierarchically organizing data item sets (A, B, B', C), (I, II) and (M, N, O), respectively. Each of the hierarchical structures 502, 504, 506 is associated with a dedicated priority value. The priority value controls the traversing order among the individual hierarchical structures 502, 504, 506. As shown in Fig. 5, the hierarchical structure 502 is associated with a priority value of 3, the hierarchal structure 504 is associated with a priority value of 2, and the hierarchical structure 506 is associated with a priority value of 1.

The effect of the priority values on a DFS-based traversing strategy of the three hierarchal structures 502, 504, 506 is shown in Fig. 6. Generally, the assigned priority values prioritize a traversing of the hierarchical structure 506 over the traversing of the hierarchical structure 504, and a traversing of the hierarchical structure 504 over a traversing of hierarchical structure 502.

As shown in Fig. 6, the linearization of the three hierarchical structures 502, 504, 506 leads to the following traversing steps (A, I, M), (A, I, N), (A, I, O), (A, II, M), (A, II, N), and so on. The resulting linearization can be interpreted to belong to a "common" or joined hierarchical structure the organization of which is dependent from the allocation of priority values to the individual hierarchical structures 502, 504, 506. The individual priority values may be pre-defined or they may be user-configurable via the application 110 residing on the application layer 102. In similar manner, a selection among the DFS traversing strategy and the BFS traversing strategy may likewise be either pre-defined or user-configurable.

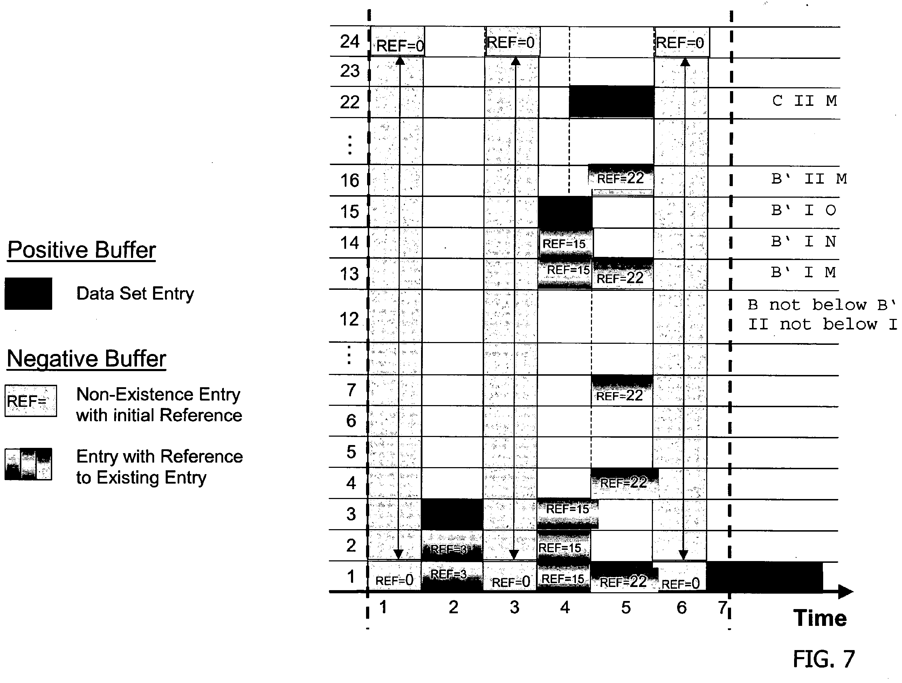

Fig. 7 schematically illustrates possible contents of the positive buffer 120 and the negative buffer 118 for a database scenario derived from the hierarchical structures 502, 504, 506 of Fig. 5 and the traversing strategy illustrated in Fig. 6. It will here be assumed that the database 112 contains data sets that comprise data items of four different data categories, wherein the data items of three data categories are interrelated in accordance with the hierarchical structures 502, 504, 506 shown in Fig. 5. This means that the first data category includes the data items (A, B, B', C), the second data category includes the data items (I, II) and the third data category includes the data items (M, N, O). A fourth data category of the data sets holds temporal information in the form of points in time (1; 2, 3, 4, ...) indicative of days, months, or the like. Accordingly, the database 112 may for example include the data set (A, II, N, 4) or (C, I, O, 1).

In the table of Fig. 7, each column is indicative of a specific point in time, and each line is indicative of a specific tuple of data items. The first line, for example, is indicative of the tuple (A, I, M) as also illustrated in Fig. 6. In a similar, line 2 stands for the subset (A, I, N), and so on. In the table, the black entries mark a data set buffered in the positive buffer 120. From the above explanation it can be seen that the positive buffer 120 contains the four data sets (A, I, O, 2), (B', I, O, 4), (C, II, M, 5), and (A, I, M, 7). In other words, these four data sets can be read directly out of the positive buffer 120 without requiring any database access.

The negative buffer 118 contains entries that are indicative of two different items of information. On the one hand, the negative buffer 118 includes the information that for a specific data item specified in the search parameter included in a database request, there does not exist any most specific data set in the database 112. In other words, in such a case neither a data set containing the particularly requested data items is existing nor any other data set including one or more parents of the first or any higher order of the hierarchically organized data items. As becomes apparent from Fig. 7, such an item of information is included in the negative buffer 118 for any database request that comprises a search parameter specifying the point in time 1, 3 or 6 for each possible subset of data items from the remaining three data categories.

A second item of information possibly represented by an entry in the negative database 118 includes a reference to the positive buffer 120 with respect to a data set being the most specific data set relative to the data items specified in the database request. In other words, if the processor 122 consults the negative buffer 118 with respect to the data set (A, I, M, 2), the negative buffer 118 contains an entry referencing the data set (A, I, O, 2) in the positive buffer 120. The processor 122 can thus infer from consulting the negative buffer 118 that the data set (A, I, O, 2) is the most specific data set from the database 112 relative to the set of data items (A, I, M, 2) specified in the search parameters included in the database request. The processor 122 will then jump directly to the corresponding entry in the positive buffer 120 and read the referenced data set (A, I, O, 2) from the positive buffer 120 and return this data set to the requesting application 110. Again, no database accesses will be required.

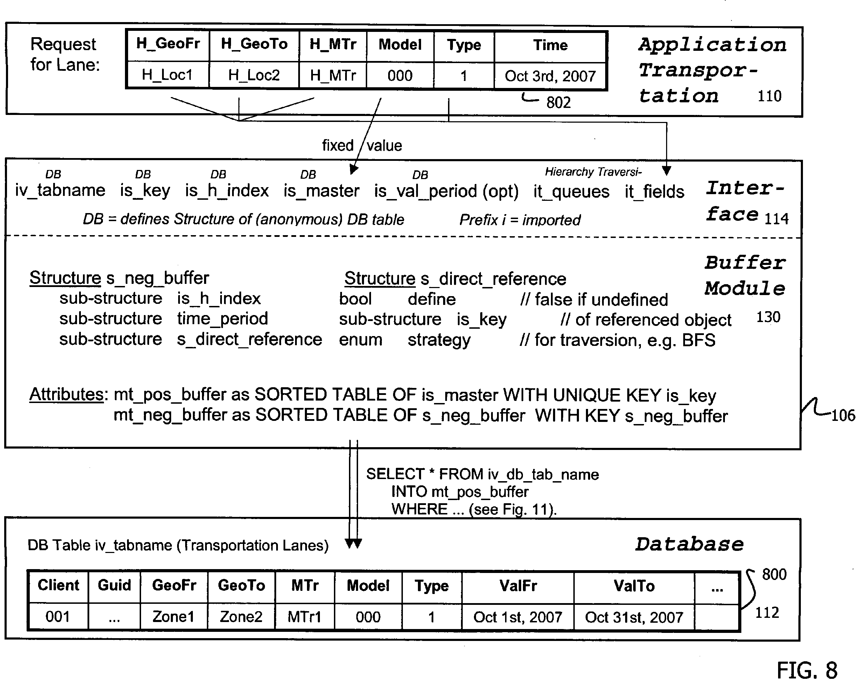

As can be seen from the white fields in Fig. 7, some database requests can neither be fulfilled by consulting the positive buffer 120 nor by consulting the negative buffer 118. This applies, for example, to the data sets (A, II, M, 4) to (B, II, O, 4). In such a case, the hierarchical structures have to be traversed starting from the set of data items specified in the search parameters included in the database request. During each traversing step, the negative buffer 118 and the positive buffer 120 may again be consulted in order to reduce any unnecessary database accesses during the traversing process. The corresponding reduction of the traversing space will now be described with reference to a more detailed embodiment illustrated in Figs. 8 to 11. In this regard, the same reference numerals as in Fig. 1 will be used to designate the same or similar components.

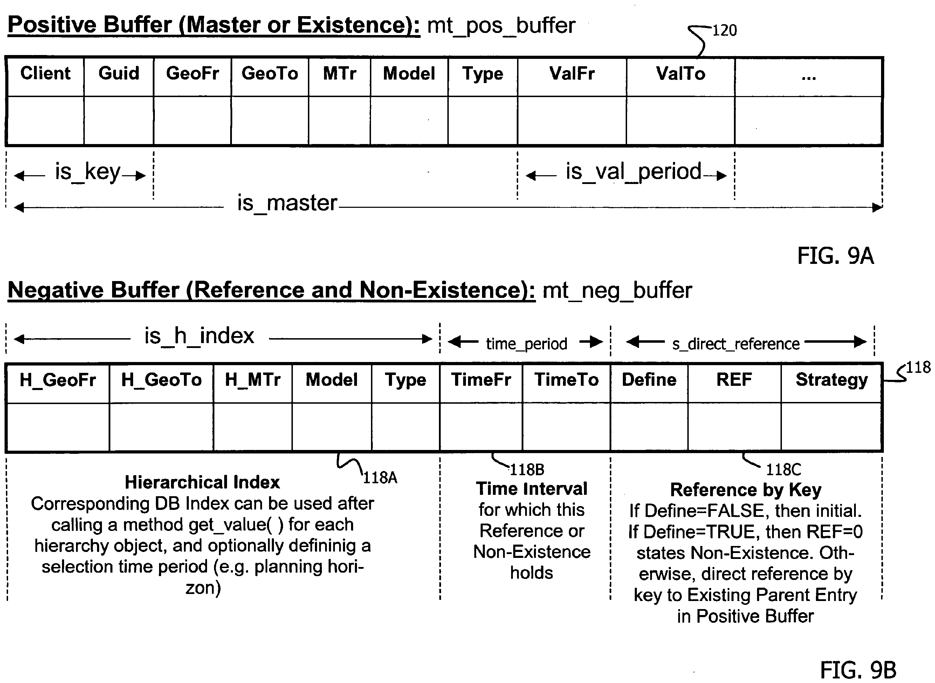

The embodiment of Figs. 8 to 11 refers to a transportation context. It will here be assumed that the database 112 shown in Fig. 8 contains thousands of data sets 800 each indicative of transportation lanes from a first location or zone (data category "GeoFr") to a second location or zone (data category "GeoTo") using a specific means of transport (data category "MTr") between two specific points in time indicative of a temporal validity of a specific data set (data categories "ValFr" and "ValTo"). While the data items of the data categories "GeoFr", "GeoTo" and "MTr" are hierarchically structured, the remaining two data categories "ValFr" and "ValTo" are not hierarchically organized. The data category "Guid" associates a globally unique identifier (e.g an alpha-numeralical value) with each data set. It should be noted that the data sets 800 include data items of further data categories (such as "Client", "Model" and "Type") that are not considered here. As becomes apparent from Fig. 9A, the structure of the table underlying the positive buffer 120 is identical to the structure of each data set 800 stored in the database 112 (see Fig. 8).

The hierarchical structuring of the data items pertaining to the data categories "GeoFr" and "GeoTo" may be performed such that a zone is a group of at least one of one or more locations and one or more zones. Any element of such a group will thus be a child of the zone, the zone acting as its parent. The data items of the data category "MTr" may be hierarchically structured as described, for example, in EP 1 617 356 A1.

The application "transportation" 110 shown in Fig. 8 is configured to provide information about the availability of transportation lanes from a first location or zone to a second location or zone using a specific means of transport at a specific point in time. The user may enter a corresponding database request into the input fields of a graphical user interface 802. A user may, for example, ask for a transport lane from München (H_Loc1) to Stuttgart (H_Loc2) by train (H_MTr) on 3 October 2007 as shown in Fig. 8. H_Loc1, H_Loc2 and H_MTr are objects representing a specific data item (such as München, Stuttgart, and Train) but also comprising all the parents of this data item. The structure and utilization of such an object is described in EP 1 617 326 A1.

After the user has filled in data items such as "München", "Stuttgart", "Train", and "3 October 2007" in the graphical user interface 802, the application 110 generates a database request that comprises these data items in the form of search parameters (it should be noted that the data categories "Model" and "Type" are not considered further in this context). The database request contains additional information that is automatically supplemented by the application 110. Such additional information includes, for example, a reference to a specific database table such as "iv_tabname".

It is important to note that the user will typically not only be interested in obtaining a data set 800 from the database 112 exactly matching the requested search parameters. Rather, in cases in which no such exactly matching data set exists the user would also be prepared to consider a transportation lane according to the most specific data set 800 relative to the search parameters specified in the graphical user interface 802. Such a data set may for example be indicative of a transportation lane from a parent of "München" (such as "Bayern") to a parent of "Stuttgart" (such as "Baden-Württemberg") or any similar transportation alternative.

The task of the middleware layer 106 can now be summarized as the search for the most specific data set in particular in cases in which no identical match is available. The middleware layer 106 shown in Fig. 8 basically includes all the components discussed above in context with Fig. 1. In Fig. 8, only the application interface 114 and a buffer module 130 comprising negative and positive buffers (reference numerals 118 and 120 in Fig. 1) are shown in more detail.

The application interface 114 can be regarded as a data structure for importing the search parameters (as specified by the user in the form of data items in the input fields of the graphical user interface 802) into the middleware layer 106. As mentioned above, portions of the content of the data structure constituting the application interface 114 (such as "iv_tabname" or "is_key") may be supplemented by the application 110 itself.

The middleware layer 106 represents a (software) module which can be regarded as a temporal memory in which two separate sorted tables are maintained for the positive and negative buffers 118, 120. The structure of these tables is shown in Fig. 9A for the positive buffer 120 and in Fig. 9B for the negative buffer 118. In Fig. 9B the structure of the table underlying the negative buffer 118 is shown. Each table entry in the negative buffer 118 comprises a hierarchical index portion 118A, a time interval portion 118B and a reference portion 118C. A field H_GeoFr of the hierarchical index portion 118A contains a reference to an object, and calling a method get_value( ) of this object returns a data item of the data category "GeoFr" (e.g. data item "Zone1" of data set 800 in Fig. 8). Similar relationships exist between the contents of the hierarchical index fields H_GeoTo and H_MTr and the content of the database key fields GeoTo and MTr, respectively. In other words, it is always possible to derive from a specific combination of data items I specified in the associated hierarchical index portion 118A the key K(I) of the data set the non-existence of which it is indicative of. Since the traversion operates on objects, having the object references instead of the corresponding key values in the negative buffer entries allows consulting the negative buffer 118 during the traversing process more efficiently. However, the key values could of course be used as well for this purpose.

The time interval portion 118B of each table entry specifies the time interval for which the associated hierarchical index portion 118A is valid (i.e., the time interval for which a specific reference or indication of non-existence holds). Basically, the reference portion 118C either includes a reference to a data set in the positive buffer 120 (e.g. by means of its Guid) or an indication that for a certain combination of data items neither an exactly matching nor any other most specific data set exists in the database 112.

In detail, the reference portion 118C defines for each table entry in the negative buffer 118 three dedicated parameters "Define", "REF" and "Strategy". The parameter "Define" can be regarded as flag indicating the hierarchical relevance of the parameter "REF". Let I be a combination a data items (e.g. "München", "Stuttgart" and "Train"), and N the entry in the negative buffer 118 which the processor 122 can find with it. If "Define" is set to FALSE, then this entry is merely indicative of the non-existence of a data set with key K(I). In this case, the parameter "REF" is always set to 0. If "Define" is set to TRUE, then this parameter has the following hierarchical relevance. If "REF" is set to 0 (initial value), then N indicates not only the non-existence of a data set with key K(I), but also the non-existence of any data set K(J) where J is a parent of I according to the joined hierarchical structures. Otherwise, if "REF" refers to a data set D in the positive buffer 120 (non-initial value), then data set D is the most specific data set among all parents J of I for all database requests for which the processor 122 consults the negative buffer 118 with I during the traversing process. This allows the middleware 106 to return the most specific data set D for all database requests specifying I immediately upon consulting the negative buffer 118 with the combination of data items I. And if the database request specifies another data item L, and the processor 122 of the middleware layer 106 determines I in a step of the traversion, then it allows the processor 122 to determine the most specific data set by skipping all traversing steps related to parents of I and in lieu thereof comparing D with all existing data sets found during the remainder of the traversing process. It should be noted here that the field "REF" for the entry N = N(I), which can be found with the combination I in the negative buffer 118, references data set D in the positive buffer 120. The content of "REF" may be a pointer to the data set in the positive buffer 118 or the global unique identifier (Guid) thereof.

The parameter "Strategy" indicates whether the entry has been generated based on a BFS or a DFS traversion strategy. The consultation of the negative buffer 118 with respect to a reference to a data set in the positive buffer 118 is restricted to database requests sharing the strategy of the corresponding entry.

It should be noted that the structuring of the positive buffer 120 and of the negative buffer 118 illustrated in Figs. 9A and 9B can be regarded as a more specific realization of the example discussed above in context with Fig. 7.

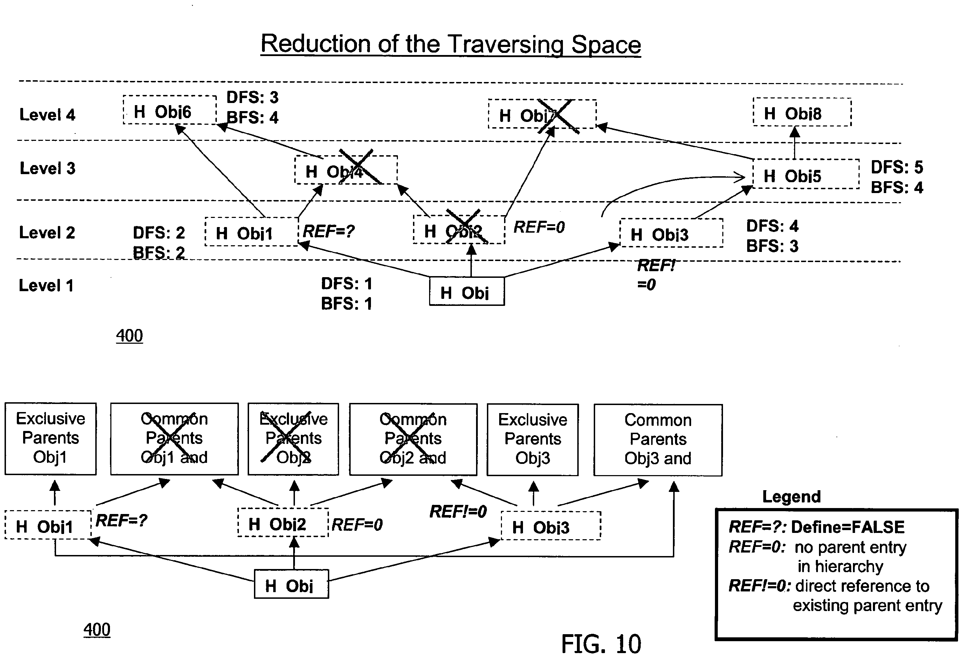

In the following, the operation of the components residing on the middleware layer 106 will be discussed with reference to the embodiment shown in Figs. 8, 9A and 9B. In particular, the avoidance of possible database accesses by consulting the negative buffer 118 during the traversing of a hierarchical structure will be explained with reference to Fig. 10.

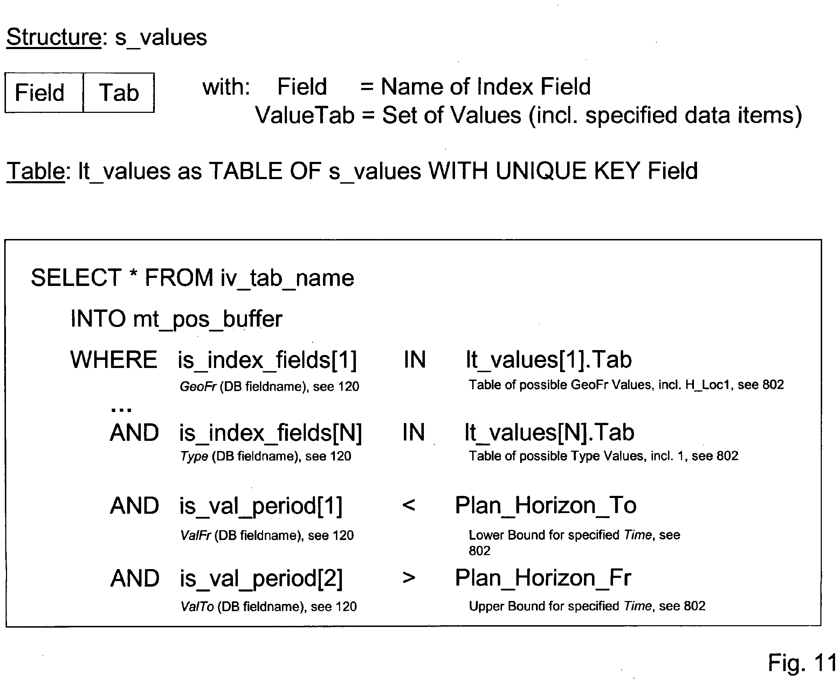

As stated above, the operation of the components on the middleware layer 106 starts with receipt of a database request including search parameters specifying a plurality of data items from the application 110. Upon receipt of the database request, the processor 122 contacts the database querying component 116 to initially retrieve the whole data space potentially required to answer the database request from the database 112. To this end the database query in component 116 generates a database query as shown in Fig. 11 to fill the positive buffer 120. In addition, the negative buffer 118 can be updated with entries indicating the non-existence of data sets which were included in the search space of the query. In an alternative embodiment, this initial database request is omitted, which means that database accesses will become necessary later on during the traversing.

Fig. 11 illustrates for the embodiment of Figs. 8, 9A and 9B the construction of the initial database query with a SELECT statement for the case that SQL is used as database query language. The reference numerals in the SELECT statement thus refer to the components illustrated in Figs. 8, 9A and 9B. The SQL key word "*" indicates that the query selects the data sets in the search space complelety (with all fields). In the considered embodiment all fields of the selected data sets are stored in one database. Therefore, the string "iv_tabname" following the SQL key word "FROM" indicates all (database) tables in the database 112 which are to be queried. The internal table following the SQL key word "INTO" indicates in which internal table of the module 106 the SELECT statement shall move the selected data sets. For the initial database query the selected data sets may be moved directly to the positive buffer 120. The search space of this query is defined by a boolean statement following the SQL key word "WHERE". This boolean statement is primarily constructed as intersection of N boolean statements, each checking the content of the database data sets with respect to an index field with a constructed table of values. Optionally, in case the database index for the data sets includes a temporal validity, this intersection also includes two comparison statements which require an overlap of the data set validity with a planning horizon (in general provided by the application 110). Some of the value tables of the N boolean statements contain, in order to cover the traversion space fully, next to the specified data item also all of its parents (e.g. It_values[1].Tab of database index field "GeoFr"). These parents are either already provided by the application 110, e.g. by means of objects as described in EP 1 617 326 A1, or have to be determined by the module represented by middleware layer 106 prior to the considered database query.

Then, in a next step, the positive buffer 120 is consulted to determine if the positive buffer 120 includes a data set completely matching the database request. If such an entry can be found, the database request received from the application 110 can be answered by reading this entry from the positive buffer 120 and returning the corresponding data set to the application 110.

If the database request cannot (in the scope of a completely matching data set) be satisfied by an entry included in the positive buffer 120, the negative buffer 118 is consulted in a further step. If a matching entry can be found in the negative buffer 119, it can be concluded that all the data required for satisfying the database request have already previously been retrieved from the database 112. This helps to reduce the amount of data that possibly still needs to be retrieved from the database 112 in context with the present database request (see also Fig. 10).

If in the reference portion 118C of the matching entry in the negative buffer 118 the parameter "Define" is set to TRUE and the parameter "REF" is set to 0, it can be concluded that there does not exist any most specific data set in the database 112 satisfying the search request. A corresponding notification message will then be returned to the application 110.

If, on the other hand, the parameter "Define" is set to TRUE and the parameter "REF" includes a specific reference to a data set in the positive buffer 120, the database request received from the application 110 can be readily answered by reading the referenced data set from the positive buffer 120 and by returning this data set to the application 110.

Of course, there may exist situations in which neither the positive buffer 120 nor the negative buffer 118 contains a matching entry for a database request received from the application 110 (the white fields in Fig. 7). In such a case, it may become necessary to construct a database query (typically because the positive buffer 120 has initially not been filled with the potentially relevant data space as the database query illustrated in Fig. 11 has been omitted).

The three hierarchical structures underlying the data categories "GeoFr", "GeoTo" and "MTr" have to be joined and linearised before the traversion can be started. Queues can be employed for each individual hierarchical structure. In the pictured embodiment the entries of the queues "GeoFr", "GeoTo" and "MTr" are objects as stored in the hierarchical index portion 118A (Fig. 9B). As the application 110 may define a prioritization among the hierarchical structures (see Fig. 5), the reading sequence of the queues can be controlled in accordance with the prioritization (see Fig. 6). In each reading step, a new combination of objects ("H_GeoFr","H_GeoTo", "H_MTr") or key values ("GeoFr","GeoTo","MTr") is obtained which will be supplemented by the search parameter "Time" specified in the database request to obtain a new search pattern for the consultation of the negative buffer 118 or positive buffer 120, respectively.

For each new search pattern (i.e., for each traversion step) the following three operations are performed. As a first operation, the positive buffer 120 is consulted to determine if the positive buffer 120 comprises a data set matching the current search pattern. If such a data set can be determined in the positive buffer 120, this data set is determined to be the most specific data set satisfying the database request. The corresponding data set is thus read from the positive buffer 120 and returned to the application 110.

If no matching entry can be found in the positive buffer 120, as a second operation the negative buffer 118 is consulted. If a matching entry can be found with the parameters "Define" being set to TRUE and "REF" being set to 0, then the traversing space can be reduced as shown in Fig. 10. If the matching entry is associated with the parameters "Define" being set to TRUE and "REF" having a value different from 0, then the search can be accelerated as also schematically illustrated in Fig. 10. The reduction of the traversing space and the acceleration of the search as illustrated in Fig. 10 is derived from the scenario discussed above in context with Figs. 4A and 4B.

If no matching entry can be found in the negative buffer 118, then such an entry is created by means of the specific search pattern. Since this entry is merely indicative of the non-existence of the single data set which key can be derived from this search pattern, the parameter "Define" is set to FALSE (the content of this entry has no hierarchical relevance), the parameter "REF" is set to 0 and the parameter "Strategy" is set to the strategy of the given database request.

Referring to Fig. 10, traversing can generally be accelerated as follows. Let S be the set of all skippable parents within the entire hierarchical structure 400. A parent can thus be skipped if it is in S. Starting the traversing process with a search pattern (primarily given by) H_Obj, the most specific data item H_Obj5 can be found with strategy "DFS" in five and with "BFS" in four traversing steps. In this example, the negative buffer entry with search pattern H_Obj3 has a reference to the existing data set given by search pattern H_Obj5. With strategy "BFS" the traversion visits H_Obj3 already after H_Obj1 and H_Obj2, but is not able to immediately return it as a result because an existing data set for search pattern H_Obj4 would need to be considered earlier. But H_Obj4 is already part of S since the traversion consulted the negative buffer for search pattern H_Obj2 (the parameters "Define" and "REF" of its entry are set to TRUE and 0, respectively). On the other hand, with strategy "DFS" the traversion process needs more steps until it reaches H_Obj3, but then it can immediately return the data set associated with H_Obj5 as the most specific data item for the database request.

If no most specific data set can be found in the complete hierarchical structure 400, then all entries that have been written into the negative buffer 118 during the individual traversing steps receive a corresponding marking in their reference portion 118C. Specifically, the parameter "Define" is set to TRUE, and the parameter "REF" is set to 0 for these entries. These entries may then be utilized in connection with the following database request from the application 110 to further reduce the traversing space.

If a most specific data set can be found during the traversing process, then all entries in the negative buffer 118, which are parents of the specified data item and children of the found most specific data item, receive a corresponding marking in their reference portion 118C. Specifically, the parameter "Define" is set to TRUE, and the parameter "REF" is set to the reference (e.g. the Guid) of this most specific data set. These entries may then also be utilized in connection with the following database request from the application 110 to further reduce the traversing space.

While the current invention has been described with respect to particular embodiments, those skilled in the art will recognize that the current invention is not limited to the specific embodiments described herein. Therefore, it is to be understood that the present disclosure is only illustrative. It is intended that the invention be limited only by the scope of the claims appended hereto.

## Claims

1. A method of processing database requests, the method comprising:
obtaining access to a database (112) with a plurality of data sets, wherein the data sets comprise data items of one or more data categories and wherein the data items of at least one data category are interrelated in a hierarchical structure in accordance with parent/child relationships, wherein the hierarchical structure exists in parallel to the data sets, wherein each data set includes one or more of the data items organized in the hierarchical structure, and wherein the hierarchical structure includes a plurality of references to the data items organized in the hierarchical structure and hierarchy information of the data items organized in the hierarchical structure;
maintaining a positive buffer (120) comprising data sets that have been retrieved in response to earlier database queries;
maintaining a negative buffer (118) with entries indicating data sets not included in the database, wherein maintaining the negative buffer (118) comprises continuously updating the negative buffer based on at least one of the results of database queries and the results of earlier database queries, and aging-out older entries;
receiving (206) a database request that comprises at least one search parameter specifying a data item belonging to the hierarchical structure, the database request being directed at retrieving the most specific data set from the database (112), the most specific data set being either a data set exactly matching the database request or a data set that comprises at least one data item that is a parent of the at least one data item specified in the database request, wherein the negative buffer (118) comprises for at least one entry included therein a reference to at least one data set in the positive buffer (120), the at least one data set being the most specific data set relative to the data item specified in the database request; and
determining (208) the most specific data set starting with the specified data item by consulting the positive buffer (120);
if it is determined that the positive buffer does not include any matching data set:
traversing the hierarchical structure in one or more traversing steps, wherein at least one of the traversing steps comprises consulting the negative buffer (118) and jumping directly to a corresponding entry in the positive buffer (120) and reading a referenced data set from the positive buffer (120) to eliminate unnecessary traversing steps ahead, wherein eliminating unnecessary traversing steps ahead comprises skipping at least one parent of the determined data item during the traversing based on determining that the referenced data set in the positive buffer (120) represents the most specific data set among the at least one skipped parent.

2. The method of claim 1, wherein at least one of the traversing steps comprises determining another data item being a parent of the specified data item, and wherein consulting the negative buffer (118) comprises searching for a data set entry including the determined parent data item in the negative buffer (118).

3. The method of claim 2, wherein determining the most specific data set comprises constructing a database query that includes the determined parent data item as a search parameter.

4. The method of claim 3, wherein the database query is constructed only if the database request cannot be answered based on the contents of the negative buffer (118) and the positive buffer (120).

5. The method of claim 1 or 4, wherein at least one of the traversing steps comprises consulting the positive buffer (120) to determine if the most specific data set can be read from the positive buffer (120).

6. The method of any one of the preceding claims, wherein maintaining the negative buffer (118) comprises continuously updating the negative buffer (118) based on at least one of the results of constructed database queries and the results of earlier database requests.

7. The method of any one of the preceding claims, wherein the data sets included in the database (112) have a limited temporal validity, and wherein temporal validity information is also associated with any entries in the negative buffer (118).

8. The method of one of any of the preceding claims, wherein traversing the hierarchical structure comprises a linearization process in which the individual data items of the hierarchical structure are arranged in a specific sequence.

9. The method of any one of the preceding claims, wherein the data sets in the database (112) comprise data items of two or more data categories, wherein the data items of two data categories are each interrelated in separate hierarchical structures in accordance with parent/child relationships, and wherein determining the most specific data set comprises prioritizing traversing of one of the two data categories over traversing of the other data category.

10. The method of any of the preceding claims, wherein the data sets relate to transportation lanes between two locations or zones, wherein the hierarchical structuring of the data items pertaining to the data categories is performed such that a zone is a group of at least one of one or more locations and one or more other zones, wherein each location is an object representing a specific data item, and any element of the group is a child of the zone acting as a parent, such that the most specific data set can be identified in cases in which no identical match is available by identifying a transportation lane from a parent of a first location to a parent of a second location.

11. The method of any of the preceding claims, further comprising receiving information representative of the hierarchical structure.

12. The method of claim 11, wherein the information representative of the hierarchical structure is received via a database access.

13. A computer program product comprising program code portions for performing the steps of any one of claims 1 to 12 when the computer program product is run on a computer system.

14. The computer program product of claim 13, stored on a computer-readable recording medium.

15. A module (106) for processing database requests, the module (106) comprising:
a database querying component (116) adapted to send search queries to a database (112) with a plurality of data sets, wherein the data sets comprise data items of one or more data categories and wherein the data items of at least one data category are interrelated in a hierarchical structure in accordance with parent/child relationships, wherein the hierarchical structure exists in parallel to the data sets, wherein each data set includes one or more of the data items organized in the hierarchical structure, and wherein the hierarchical structure includes a plurality of references to the data items organized in the hierarchical structure and hierarchy information of the data items organized in the hierarchical structure;
maintaining a positive buffer (120) comprising data sets that have been retrieved in response to earlier database queries;
maintaining a negative buffer (118) with entries indicating data sets not included in the database (112), wherein maintaining the negative buffer (118) comprises continuously updating the negative buffer based on at least one of the results of database queries and the results of earlier database queries, and aging-out older entries;
an interface (114) adapted to receive (206) a database request that comprises at least one search parameter specifying a data item belonging to the hierarchical structure, the database request being directed at retrieving the most specific data set from the database (112), the most specific data set being either a data set exactly matching the database request or a data set that comprises at least one data item that is a parent of the at least one data item specified in the database request, wherein the negative buffer (118) comprises for at least one entry included therein a reference to at least one data set in the positive buffer (120) the at least one data set being the most specific data set relative to the data item specified in the database request; and
a processor (122) adapted to determine (208) the most specific data set starting with the specified data item by consulting the positive buffer (120);
if it is determined that the positive buffer does not include any matching data set:
traversing the hierarchical structure in one or more traversing steps, wherein at least one of the traversing steps comprises consulting the negative buffer (118) and jumping directly to a corresponding entry in the positive buffer (120) and reading a referenced data set from the positive buffer (120) to eliminate unnecessary traversing steps ahead, wherein eliminating unnecessary traversing steps ahead comprises skipping at least one parent of the determined data item during the traversing based on determining that the referenced data set in the positive buffer (120) represents the most specific data set among the at least one skipped parent.

16. The module of claim 15, wherein the processor (122) is adapted to traverse the hierarchical structure to determine a parent of the specified data item and to continue the selecting with the branch of the parent.

17. The module of claim 16, wherein the database querying component (116) is adapted to construct a database query that includes the parent as a search parameter.

18. A computer system (100) comprising an application layer (102) with an application (110) adapted to generate database requests, a database layer (104) with a database (112) comprising a plurality of data sets, wherein the data sets comprise data items of one or more data categories and wherein the data items of at least one data category are interrelated in a hierarchical structure in accordance with parent/child relationships, and a module (106) according to any one of claims 15 to 17.

## Patentansprüche

1. Ein Verfahren zur Verarbeitung von Datenbankanforderungen (*database requests*), wobei das Verfahren Folgendes umfasst:
Zugreifen auf eine Datenbank (112) mit einer Vielzahl von Datensätzen, wobei die Datensätze Datenelemente einer oder mehrerer Datenkategorien umfassen und wobei die Datenelemente mindestens einer Datenkategorie in einer hierarchischen Struktur gemäß Eltern-Kind-Beziehungen miteinander in Beziehung stehen, wobei die hierarchische Struktur parallel zu den Datensätzen existiert, wobei jeder Datensatz ein oder mehrere der in der hierarchischen Struktur organisierten Datenelemente enthält und wobei die hierarchische Struktur eine Vielzahl von Verweisen auf die in der hierarchischen Struktur organisierten Datenelemente und Hierarchieinformationen der in der hierarchischen Struktur organisierten Datenelemente enthält;
Aufrechterhalten eines positiven Puffers (120), der Datensätze umfasst, die als Antwort auf frühere Datenbankabfragen (*database querys*) abgerufen wurden;
Aufrechterhalten eines negativen Puffers (118) mit Einträgen, die Datensätze angeben, die nicht in der Datenbank enthalten sind, wobei das Aufrechterhalten des negativen Puffers (118) das kontinuierliche Aktualisieren des negativen Puffers auf der Grundlage mindestens eines der Ergebnisse von Datenbankabfragen und der Ergebnisse früherer Datenbankabfragen, und das Auslagern älterer Einträge umfasst;
Empfangen (206) einer Datenbankanforderung, die mindestens einen Suchparameter umfasst, der ein zu der hierarchischen Struktur gehörendes Datenelement spezifiziert, wobei die Datenbankanforderung auf das Abrufen des spezifischsten Datensatzes aus der Datenbank (112) gerichtet ist, wobei der spezifischste Datensatz entweder ein Datensatz ist, der genau der Datenbankanforderung entspricht, oder ein Datensatz, der mindestens ein Datenelement umfasst, das ein Elternteil des mindestens einen in der Datenbankanforderung spezifizierten Datenelements ist, wobei der negative Puffer (118) für mindestens einen darin enthaltenen Eintrag einen Verweis auf mindestens einen Datensatz im positiven Puffer (120) umfasst, wobei der mindestens eine Datensatz der spezifischste Datensatz relativ zu dem in der Datenbankanforderung angegebenen Datenelement ist; und
Bestimmen (208) des spezifischsten Datensatzes beginnend mit dem spezifizierten Datenelement durch Konsultation des positiven Puffers (120);
falls festgestellt wird, dass der positive Puffer keinen übereinstimmenden Datensatz enthält:
Durchlaufen der hierarchischen Struktur in einem oder mehreren Durchlaufschritten, wobei mindestens einer der Durchlaufschritte Folgendes umfasst: das Konsultieren des negativen Puffers (118) und das direkte Springen zu einem entsprechenden Eintrag im positiven Puffer (120) und das Lesen eines referenzierten Datensatzes aus dem positiven Puffer (120), um noch kommende unnötige Durchlaufschritte zu eliminieren, wobei das Eliminieren unnötiger Durchlaufschritte das Überspringen mindestens eines Elternteils des bestimmten Datenelements während des Durchlaufens umfasst, auf der Grundlage des Bestimmens, dass der referenzierte Datensatz im positiven Puffer (120) den spezifischsten Datensatz unter dem mindestens einen übersprungenen Elternteil darstellt.

2. Das Verfahren nach Anspruch 1, wobei mindestens einer der Durchlaufschritte das Bestimmen eines anderen Datenelements umfasst, das ein Elternteil des spezifizierten Datenelements ist, und wobei das Konsultieren des negativen Puffers (118) das Suchen nach einem Datensatz-Eintrag umfasst, der das bestimmte Elternteil-Datenelement im negativen Puffer (118) enthält.

3. Das Verfahren nach Anspruch 2, wobei das Bestimmen des spezifischsten Datensatzes das Konstruieren einer Datenbankabfrage umfasst, die das ermittelte übergeordnete Datenelement als Suchparameter enthält.

4. Das Verfahren nach Anspruch 3, wobei die Datenbankabfrage nur dann aufgebaut wird, falls die Datenbankanforderung aufgrund des Inhalts des negativen Puffers (118) und des positiven Puffers (120) nicht beantwortet werden kann.

5. Das Verfahren nach Anspruch 1 oder 4, wobei mindestens einer der Durchlaufschritte das Konsultieren des positiven Puffers (120) umfasst, um festzustellen, ob der spezifischste Datensatz aus dem positiven Puffer (120) gelesen werden kann.

6. Das Verfahren nach irgendeinem der vorstehenden Ansprüche, wobei das Aufrechterhalten des negativen Puffers (118) das kontinuierliche Aktualisieren des negativen Puffers (118) umfasst, auf der Grundlage von mindestens einem der Ergebnisse konstruierter Datenbankabfragen und der Ergebnisse früherer Datenbankanforderungen.

7. Das Verfahren nach irgendeinem der vorstehenden Ansprüche, wobei die in der Datenbank (112) enthaltenen Datensätze eine begrenzte zeitliche Gültigkeit haben und wobei Informationen zur zeitliche Gültigkeit auch mit jeglichem Einträgen im negativen Puffer (118) verknüpft sind.

8. Das Verfahren nach irgendeinem der vorstehenden Ansprüche, wobei das Durchlaufen der hierarchischen Struktur einen Linearisierungsprozess umfasst, in dem die einzelnen Datenelemente der hierarchischen Struktur in einer bestimmten Reihenfolge angeordnet sind.

9. Das Verfahren nach irgendeinem der vorstehenden Ansprüche, wobei die Datensätze in der Datenbank (112) Datenelemente aus zwei oder mehr Datenkategorien umfassen, wobei die Datenelemente aus zwei Datenkategorien jeweils in getrennten hierarchischen Strukturen gemäß Eltern-Kind-Beziehungen miteinander in Beziehung stehen, und wobei das Bestimmen des spezifischsten Datensatzes das Priorisieren des Durchlaufens von einer der beiden Datenkategorien gegenüber des Durchlaufens der anderen Datenkategorie umfasst.

10. Das Verfahren nach irgendeinem der vorstehenden Ansprüche, wobei sich die Datensätze auf Transportwege zwischen zwei Orten oder Zonen beziehen, wobei das hierarchische Strukturieren der zu den Datenkategorien gehörenden Datenelemente so durchgeführt wird, dass eine Zone eine Gruppe von mindestens einem oder mehreren Orten und einer oder mehreren anderen Zonen ist, wobei jeder Ort ein Objekt ist, das ein spezifisches Datenelement darstellt, und jedes Element der Gruppe ein Kind der Zone ist, die als Elternteil fungiert, sodass der spezifischste Datensatz in Fällen identifiziert werden kann, in denen keine identische Übereinstimmung (*identical match*) verfügbar ist, indem ein Transportweg von einem Elternteil eines ersten Ortes zu einem Elternteil eines zweiten Ortes identifiziert wird.

11. Das Verfahren nach irgendeinem der vorstehenden Ansprüche, das ferner das Empfangen von Informationen umfasst, die für die hierarchische Struktur stellvertretend sind.

12. Das Verfahren nach Anspruch 11, wobei die für die hierarchische Struktur stellvertretende Information über einen Datenbankzugriff empfangen wird.

13. Ein Computerprogrammprodukt, das Programmcodeabschnitte zum Ausführen der Schritte nach irgendeinem der Ansprüche von 1 bis 12 umfasst, wenn das Computerprogrammprodukt auf einem Computersystem ausgeführt wird.

14. Das Computerprogrammprodukt nach Anspruch 13, das auf einem computerlesbaren Aufzeichnungsmittel gespeichert ist.

15. Ein Modul (106) zur Verarbeitung von Datenbankanforderungen, wobei das Modul (106) Folgendes umfasst:
eine Datenbankabfrage-Komponente (116), die geeignet ist, Suchabfragen an eine Datenbank (112) mit einer Vielzahl von Datensätzen zu senden, wobei die Datensätze Datenelemente einer oder mehrerer Datenkategorien umfassen und wobei die Datenelemente mindestens einer Datenkategorie in einer hierarchischen Struktur gemäß Eltern-Kind-Beziehungen miteinander in Beziehung stehen, wobei die hierarchische Struktur parallel zu den Datensätzen existiert, wobei jeder Datensatz eines oder mehrere der in der hierarchischen Struktur organisierten Datenelemente enthält, und wobei die hierarchische Struktur eine Vielzahl von Verweisen auf die in der hierarchischen Struktur organisierten Datenelemente und Hierarchieinformationen der in der hierarchischen Struktur organisierten Datenelemente enthält;
Aufrechterhalten eines positiven Puffers (120), der Datensätze umfasst, die als Antwort auf frühere Datenbankabfragen (*database querys*) abgerufen wurden;
Aufrechterhalten eines negativen Puffers (118) mit Einträgen, die Datensätze angeben, die nicht in der Datenbank enthalten sind, wobei das Aufrechterhalten des negativen Puffers (118) das kontinuierliche Aktualisieren des negativen Puffers auf der Grundlage mindestens eines der Ergebnisse von Datenbankabfragen und der Ergebnisse früherer Datenbankabfragen, und das Auslagern älterer Einträge umfasst;
eine Schnittstelle (114), die angepasst ist zum Empfangen (206) einer Datenbankanforderung, die mindestens einen Suchparameter umfasst, der ein zu der hierarchischen Struktur gehörendes Datenelement spezifiziert, wobei die Datenbankanforderung auf das Abrufen des spezifischsten Datensatzes aus der Datenbank (112) gerichtet ist, wobei der spezifischste Datensatz entweder ein Datensatz ist, der genau der Datenbankanforderung entspricht, oder ein Datensatz, der mindestens ein Datenelement umfasst, das ein Elternteil des mindestens einen in der Datenbankanforderung spezifizierten Datenelements ist, wobei der negative Puffer (118) für mindestens einen darin enthaltenen Eintrag einen Verweis auf mindestens einen Datensatz im positiven Puffer (120) umfasst, wobei der mindestens eine Datensatz der spezifischste Datensatz relativ zu dem in der Datenbankanforderung angegebenen Datenelement ist; und
einen Prozessor (122), der angepasst ist zum Bestimmen (208) des spezifischsten Datensatzes beginnend mit dem spezifizierten Datenelement durch Konsultation des positiven Puffers (120);
falls festgestellt wird, dass der positive Puffer keinen übereinstimmenden Datensatz enthält:
Durchlaufen der hierarchischen Struktur in einem oder mehreren Durchlaufschritten, wobei mindestens einer der Durchlaufschritte Folgendes umfasst: das Konsultieren des negativen Puffers (118) und das direkte Springen zu einem entsprechenden Eintrag im positiven Puffer (120) und das Lesen eines referenzierten Datensatzes aus dem positiven Puffer (120), um noch kommende unnötige Durchlaufschritte zu eliminieren, wobei das Eliminieren unnötiger Durchlaufschritte das Überspringen mindestens eines Elternteils des bestimmten Datenelements während des Durchlaufens umfasst, auf der Grundlage des Bestimmens, dass der referenzierte Datensatz im positiven Puffer (120) den spezifischsten Datensatz unter dem mindestens einen übersprungenen Elternteil darstellt.

16. Das Modul nach Anspruch 15, wobei der Prozessor (122) angepasst ist, um die hierarchische Struktur zu durchlaufen, um ein Elternteil des spezifizierten Datenelements zu bestimmen und um das Auswählen mit dem Zweig des Elternteils fortzusetzen.

17. Das Modul von Anspruch 16, wobei die Datenbankabfrage-Komponente (116) angepasst ist, um eine Datenbankabfrage zu konstruieren, die den Elternteil als Suchparameter enthält.

18. Ein Computersystem (100) umfassend eine Anwendungsschicht (102) mit einer Anwendung (110), angepasst zum Erzeugen von Datenbankanforderungen, eine Datenbankschicht (104) mit einer Datenbank (112), die eine Vielzahl an Datensätzen umfasst, wobei die Datensätze Datenelemente einer oder mehrerer Datenkategorien umfassen und wobei die Datenelemente mindestens einer Datenkategorie in einer hierarchischen Struktur gemäß Eltern-Kind-Beziehungen miteinander in Beziehung stehen, und ein Modul (106) gemäß einem der Ansprüche 15 bis 17.

## Revendications

1. Un procédé de traitement de requêtes (*requests*) de base de données, le procédé comprenant le fait de :
obtenir l'accès à une base de données (112) avec une pluralité d'ensembles de données, sachant que les ensembles de données comprennent des éléments de données d'une ou plusieurs catégories de données et sachant que les éléments de données d'au moins une catégorie de données sont liés entre eux dans une structure hiérarchique selon des relations parents/enfants, sachant que la structure hiérarchique existe en parallèle aux ensembles de données, sachant que chaque ensemble de données inclut un ou plusieurs des éléments de données organisés dans la structure hiérarchique, et sachant que la structure hiérarchique inclut une pluralité de références aux éléments de données organisés dans la structure hiérarchique et des informations de hiérarchie des éléments de données organisés dans la structure hiérarchique ;
maintenir un tampon positif (120) comprenant des ensembles de données qui ont été récupérés en réponse à des interrogations (*queries*) de base de données antérieures ;
maintenir un tampon négatif (118) avec des entrées indiquant des ensembles de données non inclus dans la base de données, sachant que le maintien du tampon négatif (118) comprend la mise à jour continue du tampon négatif sur la base d'au moins un des résultats des interrogations de base de données et des résultats des interrogations de base de données antérieures, et le purger à cause de vieillissement (*aging-out*) des entrées plus anciennes ;
recevoir (206) une requête de base de données qui comprend au moins un paramètre de recherche spécifiant un élément de données appartenant à la structure hiérarchique, la requête de base de données étant dirigée vers la récupération de l'ensemble de données le plus spécifique depuis la base de données (112), l'ensemble de données le plus spécifique étant soit un ensemble de données correspondant exactement à la requête de base de données, soit un ensemble de données qui comprend au moins un élément de données qui est un parent de l'au moins un élément de données spécifié dans la requête de base de données, sachant que le tampon négatif (118) comprend, pour au moins une entrée qui y est incluse, une référence à au moins un ensemble de données dans le tampon positif (120), l'au moins un ensemble de données étant l'ensemble de données le plus spécifique par rapport à l'élément de données spécifié dans la requête de base de données ; et
déterminer (208) l'ensemble de données le plus spécifique en commençant par l'élément de données spécifié en consultant le tampon positif (120) ;
s'il est déterminé que le tampon positif n'inclut aucun ensemble de données apparié:
traverser la structure hiérarchique en une ou plusieurs étapes de traversée, sachant qu'au moins l'une des étapes de traversée comprend la consultation du tampon négatif (118) et le saut direct à une entrée correspondante dans le tampon positif (120) et la lecture d'un ensemble de données référencées à partir du tampon positif (120) pour éliminer les étapes de traversée inutiles à venir, sachant que l'élimination des étapes de traversée inutiles comprend l'omission d'au moins un parent de l'élément de données déterminé pendant la traversée sur la base de la détermination que l'ensemble de données référencé dans le tampon positif (120) représente l'ensemble de données le plus spécifique parmi les au moins un parent omis.

2. Le procédé d'après la revendication 1, sachant qu'au moins une des étapes de traversée comprend la détermination d'un autre élément de données étant un parent de l'élément de données spécifié, et sachant que la consultation du tampon négatif (118) comprend la recherche d'une entrée d'ensemble de données incluant l'élément de données parent déterminé dans le tampon négatif (118).

3. Le procédé d'après la revendication 2, sachant que la détermination de l'ensemble de données le plus spécifique comprend la construction d'une interrogation de base de données qui inclut comme paramètre de recherche l'élément de données parent déterminé.

4. Le procédé d'après la revendication 3, sachant que l'interrogation de base de données n'est construite que s'il est impossible de répondre à la requête de base de données sur la base du contenu du tampon négatif (118) et du tampon positif (120).

5. Le procédé d'après la revendication 1 ou 4, sachant qu'au moins une des étapes de traversée comprend la consultation du tampon positif (120) afin de déterminer si l'ensemble de données le plus spécifique peut être lu à partir du tampon positif (120).

6. Le procédé d'après l'une quelconque des revendications précédentes, sachant que le maintien du tampon négatif (118) comprend la mise à jour continue du tampon négatif (118) sur la base d'au moins un des résultats d'interrogations de base de données construites et des résultats de requêtes de base de données antérieures.

7. Le procédé d'après l'une quelconque des revendications précédentes, sachant que les ensembles de données inclus dans la base de données (112) ont une validité temporelle limitée, et sachant que des informations de validité temporelle sont également associées à toute entrée dans le tampon négatif (118).

8. Le procédé d'après l'une quelconque des revendications précédentes, sachant que la traversée de la structure hiérarchique comprend un processus de linéarisation dans lequel les éléments individuels de données de la structure hiérarchique sont disposés dans une séquence spécifique.

9. Le procédé d'après l'une quelconque des revendications précédentes, sachant que les ensembles de données dans la base de données (112) comprennent des éléments de données de deux ou plusieurs catégories de données, sachant que les éléments de données de deux catégories de données sont chacun reliés entre eux dans des structures hiérarchiques séparées selon des relations parents/enfants, et sachant que la détermination de l'ensemble de données le plus spécifique comprend le fait de classifier par ordre de priorité la traversée de l'une des deux catégories de données sur la traversée de l'autre catégorie de données.

10. Le procédé d'après l'une quelconque des revendications précédentes, sachant que les ensembles de données se rapportent à des voies de transport entre deux emplacements ou zones, sachant que la structuration hiérarchique des éléments de données se rapportant aux catégories de données est effectuée de telle manière qu'une zone est un groupe d'au moins un ou plusieurs emplacements et une ou plusieurs autres zones, sachant que chaque emplacement est un objet représentant un élément de données spécifique, et que tout élément du groupe est un enfant de la zone agissant en tant que parent, de façon que l'ensemble de données le plus spécifique peut être identifié dans les cas où aucune correspondance identique n'est disponible en identifiant une voie de transport depuis un parent d'un premier emplacement à un parent d'un deuxième emplacement.

11. Le procédé d'après l'une quelconque des revendications précédentes, comprenant en outre la réception d'informations représentant la structure hiérarchique.

12. Le procédé d'après la revendication 11, sachant que l'information représentant la structure hiérarchique est reçue par un accès à une base de données.

13. Un produit-programme informatique comprenant des portions de code de programme pour exécuter les étapes d'après l'une quelconque des revendications de 1 à 12 lorsque le produit-programme informatique est exécuté sur un système informatique.

14. Le produit-programme informatique d'après la revendication 13, stocké sur un support d'enregistrement lisible par ordinateur.

15. Un module (106) pour traiter des requêtes de base de données, le module (106) comprenant :
un composant d'interrogation de base de données (116) adapté pour envoyer des interrogations de recherche à une base de données (112) avec une pluralité d'ensembles de données, sachant que les ensembles de données comprennent des éléments de données d'une ou plusieurs catégories de données et sachant que les éléments de données d'au moins une catégorie de données sont reliés entre eux dans une structure hiérarchique selon des relations parents/enfants, sachant que la structure hiérarchique existe en parallèle aux ensembles de données, sachant que chaque ensemble de données comprend un ou plusieurs des éléments de données organisés dans la structure hiérarchique, et sachant que la structure hiérarchique inclut une pluralité de références aux éléments de données organisés dans la structure hiérarchique et des informations de hiérarchie des éléments de données organisés dans la structure hiérarchique ;
maintenir un tampon positif (120) comprenant des ensembles de données qui ont été récupérés en réponse à des interrogations (*queries*) de base de données antérieures ;
maintenir un tampon négatif (118) avec des entrées indiquant des ensembles de données non inclus dans la base de données (112), sachant que le maintien du tampon négatif (118) comprend la mise à jour continue du tampon négatif sur la base d'au moins un des résultats des interrogations de base de données et des résultats des interrogations de base de données antérieures, et le purger à cause de vieillissement (*aging-out*) des entrées plus anciennes ;
une interface (114) adaptée pour recevoir (206) une requête de base de données qui comprend au moins un paramètre de recherche spécifiant un élément de données appartenant à la structure hiérarchique, la requête de base de données étant dirigée vers la récupération de l'ensemble de données le plus spécifique depuis la base de données (112), l'ensemble de données le plus spécifique étant soit un ensemble de données correspondant exactement à la requête de base de données, soit un ensemble de données qui comprend au moins un élément de données qui est un parent de l'au moins un élément de données spécifié dans la requête de base de données, sachant que le tampon négatif (118) comprend, pour au moins une entrée qui y est incluse, une référence à au moins un ensemble de données dans le tampon positif (120), l'au moins un ensemble de données étant l'ensemble de données le plus spécifique par rapport à l'élément de données spécifié dans la requête de base de données ; et
un processeur (122) adapté pour déterminer (208) l'ensemble de données le plus spécifique en commençant par l'élément de données spécifié en consultant le tampon positif (120) ;
s'il est déterminé que le tampon positif n'inclut aucun ensemble de données apparié:
traverser la structure hiérarchique en une ou plusieurs étapes de traversée, sachant qu'au moins l'une des étapes de traversée comprend la consultation du tampon négatif (118) et le saut direct à une entrée correspondante dans le tampon positif (120) et la lecture d'un ensemble de données référencées à partir du tampon positif (120) pour éliminer les étapes de traversée inutiles à venir, sachant que l'élimination des étapes de traversée inutiles comprend l'omission d'au moins un parent de l'élément de données déterminé pendant la traversée sur la base de la détermination que l'ensemble de données référencé dans le tampon positif (120) représente l'ensemble de données le plus spécifique parmi les au moins un parent omis.

16. Le module d'après la revendication 15, sachant que le processeur (122) est adapté pour traverser la structure hiérarchique afin de déterminer un parent de l'élément de données spécifié et pour continuer la sélection avec la branche du parent.

17. Le module d'après la revendication 16, sachant que le composant d'interrogation de base de données (116) est adapté pour construire une interrogation de base de données qui inclut le parent comme paramètre de recherche.

18. Un système informatique (100) comprenant une couche d'application (102) avec une application (110) adaptée pour générer des requêtes de base de données, une couche de base de données (104) avec une base de données (112) comprenant une pluralité d'ensembles de données, sachant que les ensembles de données comprennent des éléments de données d'une ou plusieurs catégories de données et sachant que les éléments de données d'au moins une catégorie de données sont reliés entre eux dans une structure hiérarchique selon des relations parents/enfants, et un module (106) d'après l'une quelconque des revendications de 15 à 17.
